# EUROPÄISCHE PATENTSCHRIFT

(11) **EP 3 741 191 B1**
(45) Veröffentlichungstag und Bekanntmachung des Hinweises auf die Patenterteilung: **27.11.2024**
(21) Anmeldenummer: 19706986.7
(22) Anmeldetag: 21.02.2019
(51) Int. Cl.: H05B 47/10, H05B 47/18

(54) **BUSFÄHIGER BELEUCHTUNGSSYSTEM-TEILNEHMER MIT DEZENTRALER BUSVERSORGUNG**
DEVICE FOR A LIGHTING NETWORK BUS WITH DECENTRALIZED POWER SUPPLY
APPAREIL POUR UN RÉSEAU D'ÉCLAIRAGE AVEC UNE ALIMENTATION DÉCENTRALISÉE

(30) Priorität: 28.02.2018 DE 102018202962
(43) Veröffentlichungstag der Anmeldung: 25.11.2020
(73) Patentinhaber: Tridonic GmbH & Co. KG, 6851 Dornbirn (AT)
(72) Erfinder: LOCHMANN, Frank, 88147 Achberg (DE); SCHERTLER, Markus, 6952 Hittisau (AT)
(74) Vertreter: Rupp, Christian
(86) Internationale Anmeldenummer: PCT/EP2019/054375
(87) Internationale Veröffentlichungsnummer: WO 2019/166327

(56) Entgegenhaltungen:
- WO-A1-2017/046248
- WO-A2-2013/149262
- DE-A1- 102011 080 500
- DE-A1- 102016 201 390

## Beschreibung

Die vorliegende Erfindung bezieht sich auf busfähige Beleuchtungssystem-Teilnehmer, wie Aktoren und Sensoren in einem Beleuchtungssystem mit Busanschluss, sowie auf Verfahren zum Betrieb eines derartigen busfähigen Beleuchtungssystem-Teilnehmers.

Das Beleuchtungssystem weist dabei bevorzugt den Bus auf, der dazu ausgelegt ist, im Ruhezustand Spannung zu führen und daher als Spannungsversorgung für Aktoren und Sensoren in dem Beleuchtungssystem zu dienen. Ein Beispiel für einen derartigen Bus ist das Digital Addressable Lighting Interface, kurz: DALI, das im IEC 62386 normiert ist.

DALI ist in der Gebäudeautomatisierung ein Protokoll zur Steuerung von lichttechnischen Betriebsgeräten, wie beispielsweise Schaltnetzteilen, elektronischen Vorschaltgeräten oder elektrischen Leistungsdimmern, um Leuchtmittel zu steuern, deren Betriebszustand zu überwachen und/oder mit Strom zu versorgen.

Jedes Betriebsgerät, das über eine DALI-Schnittstelle verfügt, kann über entsprechende DALI-Adressen einzeln angesteuert werden und kann die Intensität eines Leuchtmittels oder einer Sensorik im Beleuchtungssystem verändern. Überdies sind Aktoren vorgesehen. Ein bidirektionaler Datenaustausch zwischen einem DALI-Steuergerät und einem DALI-Gerät ermittelt beispielsweise den Status eines einzelnen Leuchtmittels oder einer Gruppe von Leuchtmitteln oder dem Betriebsgerät selbst und kann darüber hinaus dieses steuern. DALI verwendet ein serielles asynchrones Datenprotokoll mit einer Übertragungsrate von 1200 Bit/s bei einem Spannungsniveau von 16 V mittels Zweidrahtkommunikation.

Die Energieversorgung des Beleuchtungssystems erfolgt über einen gesonderten Bus. Dabei sind zwei Kommunikationsleitungen DA+ und DA- bevorzugt galvanisch von dieser Netzversorgung getrennt und polaritätsfrei. Diese zwei Kommunikationsleitungen DA+ und DA- dienen gleichzeitig als Spannungsversorgungsleitungen. Diese Leitungen können in beliebiger Topologie, also Stern-, Linien- oder Baumstruktur verlegt werden. Abschlusswiderstände am Ende der Stromversorgungsleitungen sind nicht notwendig. Die zwei Kommunikationsleitungen, die auch als Versorgungsleitungen dienen, werden nachfolgend als Spannung führender Bus bezeichnet.

Aus dem DALI-Standard IEC 62386 ist abzuleiten, dass maximal 64 Aktoren pro Bus angesteuert werden können. Die maximale Stromentnahme des Busses ist dabei auf einen vorgegebenen Wert beschränkt und beträgt bevorzugt 250 Milliampere, was nachfolgend als maximale Stromentnahme bezeichnet ist.

Um sicherzustellen, dass die maximale Stromentnahme von 250 Milliampere aus dem Bus nicht überschritten wird, ist eine spezielle DALI-Versorgungseinheit vorgesehen. Diese DALI-Versorgungseinheit erzeugt einen konstanten Ausgangsstrom von nominal 200 Milliampere bis 250 Milliampere bei einer Spannungsversorgung von 16 Volt im Ruhemodus des Beleuchtungssystems.

Für eine aktuelle Stromentnahme oberhalb des vorgegebenen Werts für eine maximale Stromentnahme sind die an den Bus angeschlossenen Busteilnehmer nicht ausgelegt, sodass die Busteilnehmer vor einer Stromentnahme oberhalb der maximalen Stromentnahme zu schützen sind. Insbesondere eine Parallelschaltung mehrerer DALI-Versorgungseinheiten ist daher nicht möglich, da bei Parallelschaltung ein Ausgangsstrom auf dem Bus erzeugt würde, der oberhalb der maximalen Stromentnahme liegt.

Darüber hinaus ist gemäß DALI-Standard IEC 62389 vorgesehen, dass eine Kommunikation zwischen einzelnen Elementen des Beleuchtungssystems, nachfolgend auch als Busteilnehmer bezeichnet, über den Bus unmöglich ist, bevor nicht eine Startprozedurwartezeit abgelaufen ist. Erst nach dem Ablauf dieser Startprozedurwartezeit gilt der DALI-Bus als stabil und lässt eine Kommunikation zwischen den Busteilnehmern zu. Die Startprozedurwartezeit beträgt bevorzugt 600 Millisekunden.

Würden also mehrere DALI-Versorgungseinheiten parallel betrieben werden, könnte innerhalb dieser Startprozedurwartezeit ein durch den Bus fließender Strom die maximale Stromentnahme überschreiten, wodurch die Busteilnehmer möglicherweise überlastet würden und somit beschädigt oder zerstört würden.

Aus der WO 2017/046248 A1 ist eine Versorgungseinheit für einen Bus bekannt. Dabei weist der Busteilnehmer eine Versorgungseinheit auf, die einen Messstrom auf einen Gebäudetechnikbus ausgibt. Eine Steuereinheit des Busteilnehmers erfasst einen Busstrom auf dem Gebäudetechnikbus und wertet ihn aus. Aus der DE102011080500A1 ist eine weitere Busstromversorgung zur Erkennung von Kurzschlüssen bekannt.

Ausgehend von diesem Stand der Technik DE102011080500A1 ist es Aufgabe der vorliegenden Erfindung, das Aufschalten einer dezentralen Spannungsversorgung in einem busfähigen Beleuchtungssystem-Teilnehmer auf einen im Ruhezustand spannungführenden Bus zu verbessern.

Diese Aufgabe wird gelöst durch die Merkmale der unabhängigen Ansprüche.

Die abhängigen Ansprüche bilden den zentralen Gedanken der Erfindung in besonders vorteilhafter Weise weiter.

Die Erfindung schlägt also vor einen busfähigen Beleuchtungssystem-Teilnehmer, der eine Spannungsversorgung aufweist sowie Anschlüsse zur Versorgung eines Busses. Das also der Teilnehmer den Bus versorgen kann, der nicht die Zentrale darstellt, liegt eine dezentrale Busversorgung vor, was besondere Massnahmen und Ausgestaltungen erfordert.

Der Bus ist derart ausgelegt, dass er im Ruhezustand (kein Senden auf dem Bus) Spannung, insbesondere eine DC-Spannung ungleich null führt. Weiterhin weist der Teilnehmer eine Steuerschaltung auf, die dazu ausgelegt ist, eine Veränderung der Spannung auf dem Bus in Folge jedes der beiden folgenden Ereignisse zu erfassen:
a) Änderung der Spannung auf dem Bus nach Aufschalten der Spannungsversorgung des Teilnehmers, und
b) Änderung der Spannung auf dem Bus nach einem Kurzschließen des Busses durch den Teilnehmer.

Die Steuerschaltung ist dazu ausgelegt, bei einem Aufschalten der Spannungsversorgung auf dem Bus zu erfassen, ob sich die Polarität der Spannung auf dem Bus im Zuge des Aufschaltens ändert.

Die Steuerschaltung ist dazu ausgelegt zu erfassen, wie schnell sich die Busspannung nach einem Kurzschließen wieder erholt, also von dem Kurzschlusspegel (0 V) wieder auf den DC-Spannungspegel vor dem Kurzschluss ansteigt.

Typischerweise ist ein derartiger Beleuchtungssystem-Teilnehmer ein Aktor wie beispielsweise ein Betriebsgerät für Leuchtmittel (LEDs, OLEDs, Gasentladungslampen, etc.) oder ein Sensor (Bewegungssensor, Anwesenheitssensor, Lichtsensor wie beispielsweise Tageslichtsensor, Rauchmelder, etc.).

Die Erfindung bezieht sich auch auf ein Verfahren zum Betrieb eines busfähigen Beleuchtungssystem-Teilnehmers. Der Teilnehmer weist eine Spannungsversorgung auf, die selektiv zur Versorgung eines Busses aufschaltbar ist, der im Ruhezustand Spannung führt. Dazu weist der Teilnehmer vorzugsweise zwei Anschlüsse zur Versorgung eines Leitungspaares des Busses auf. Gemäß dem erfindungsgemäßen Verfahren wird die Veränderung der Busspannung, also die Änderung des DC-Pegels in Folge jedes der beiden folgenden Ereignisse erfasst, und zwar durch den Teilnehmer:
a) Das Aufschalten der Spannungsversorgung (des Teilnehmers), und
b) Kurzschließen des Busses durch den Teilnehmer.

Weitere Merkmale, Vorteile und Eigenschaften der Erfindung sollen nunmehr bezugnehmend auf die Figuren der begleitenden Zeichnungen erläutert werden:
Die Figur zeigt ein Ausführungsbeispiel einer erfindungsgemäßen dezentralen Busteilnehmers mit Versorgungseinheit.

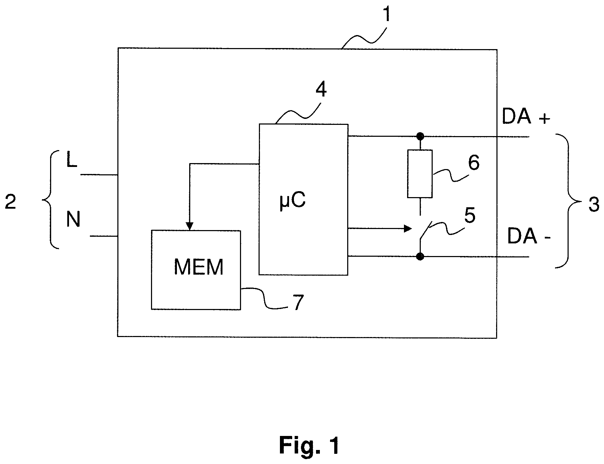

In Fig. 1 ist eine Versorgungseinheit 1 dargestellt, die gemäss der Erfindung Teil eines (dezentralen) Busteilnehmers ist, insbesondere im Bereich der Gebäudetechnik. Der Teilnehmer mit Bus-Versorgungseinheit kann bspw. ein Aktor (Betriebsgerät für Leuchmittel) oder eine Sensor im Bereich der Beleuchtungstechnik sein.

Die Versorgungseinheit 1 umfasst Eingangsanschlüsse 2, dargestellt als Netzleitung L und die Neutralleitung N. Erfindungsgemäß nicht ausgeschlossen ist die Verwendung einer Versorgungseinheit 1, die zusätzlich einen Schutzleiter PE aufweist. Die Versorgungseinheit 1 weist zudem eine DALI-Schnittstelle auf, die hier als Bus 3 mit den Leitungen DA+ und DA- dargestellt ist. Derartige DALI-Versorgungseinheiten dienen zur Versorgung eines Busses 3 mit einer DC-Spannung, an dem weitere DALI-Betriebsgeräte, elektronische Vorschaltgeräte oder Leistungsdimmer, Aktoren oder Sensoren als Busteilnehmer angeschlossen sind. Vorzugsweise ist indessen keine zentrale Busversorgung vorgesehen. Weitere Teilnehmer können ebenfalls Bus-Versorgungen aufweisen.

Die Versorgungseinheit gemäß Fig. 1 ist bpsw. eingerichtet, den Bus 3 mit einem Strom von 240 Milliampere zu versorgen. Dabei wird eine Netzversorgungsspannung von 220 Volt bis 240 Volt an die Eingangsanschlüsse 2 angelegt. Die Netzversorgungsspannung hat typischerweise eine Netzfrequenz von 50 Hertz oder 60 Hertz. Die Versorgungseinheit ist daher ausgelegt, eine Leistung von 5 Watt abzugeben. Die Ausgansspannung beträgt 16 Volt bei +/- 5% Toleranz. Das DALI-Signal ist kein SELV.

In der Versorgungseinheit 1 ist eine Steuereinheit 4 vorgesehen. Die Steuereinheit 4 ist beispielsweise als Mikrocontroller, als ASIC als FPGA oder CPLD ausgebildet. Die Steuereinheit 4 ist mit dem Bus 3 verbunden. In der Versorgungseinheit 1 ist zudem ein Kurzschlussschalter 5 vorgesehen. Der Kurzschlussschalter 5 ist vorgesehen, um den Bus 3 kurzzuschließen. Dazu weist der Kurzschlussschalter 5 einen ersten Schaltzustand I auf, um die Leitung DA+ und DA- miteinander zu verbinden. In einem zweiten Schaltzustand II hebt der Kurzschlussschalter 5 eine Verbindung zwischen den Stromversorgungsleitungen DA+ und DA- auf. Das Wechseln des Schaltzustands des Kurzschlussschalters 5 wird durch die Steuereinheit 4 veranlasst. Dazu wird ein Schaltsignal durch die Steuereinheit 4 generiert. Mittels des Kurzschlussschalters 5 kann nun eine Stromentnahme aus dem Bus 3, der durch die Versorgungsleitungen DA+, DA- fließt, erfasst werden. Hierzu ist ein Messelement 6 in der Verbindung zwischen den Versorgungsleitungen DA+, DA- vorgesehen. Die Steuereinheit 4 ist dazu vorgesehen, einen Spannungsabfall über beispielsweise einem als Strom-Messwiderstand ausgebildeten Messelement 6 bei Kurzschluss des Kurzschlussschalters 5 zu erfassen. Alternativ erfolgt mittels des Messelements 6 eine galvanische Kopplung, beispielsweise mittels gekoppelter Spulen, oder alternativ mittels eines Optokopplers. Die erfasste Stromentnahme aus dem Bus 3 wird in der Steuereinheit 4 ausgewertet. In Abhängigkeit der Höhe des Stromwerts und im Vergleich zu einem vorgegebenen Wert lₓ für eine maximale Stromentnahme, beispielsweise 240 mA gemäß dem DALI-Standard IEC 62389, erfolgt sodann das Bereitstellen einer Energieversorgung auf dem Bus 3 durch die Versorgungseinheit 3 und ein Öffnen des Schalters 5 oder ein Nichtbereitstellen der Energieversorgung und Öffnen des Schalters 5.

Optional ist in der Versorgungseinheit 1 ein Speicherelement 7 vorgesehen. In diesem Speicherelement 7 sind beispielsweise DALI-Adressen, DALI-Beleuchtungsgruppen, DALI-Beleuchtungsszenarien und/oder Dimmwerte abgelegt, die für eine spezifische Einstellung des Beleuchtungssystems A vorgesehen sind. Bei einem Wechsel eines Betriebsgeräts 8 in dem Beleuchtungssystem A kann nun mittels des Speichers 7 die Einstellung des Beleuchtungssystems A gesichert werden. Alle relevanten Daten der an die Beleuchtungssysteme A angeschlossenen Elemente 8 können somit im Speicher 7 abgespeichert werden. Somit dienen diese Daten im Speicher 7 als Backup-Daten für den Fall, dass ein Betriebsgerät im Beleuchtungssystem A zu ersetzen ist.

### Erfindungsgemäßer Ablauf bei der Aufschaltung der dezentralen Busversorgung eines Teilnehmers:

Die erfindungsgemäße Ausgestaltung eines Teilnehmers beziehungsweise ein erfindungsgemäßes Verfahren ist nunmehr wie folgt:

### Schritt 1:

In einem ersten Schritt wird in dem Teilnehmer mit Versorgungseinheit gemessen, ob bereits eine Stromversorgung an den DALI-Bus aufgeschaltet ist. Diese Stromversorgung kann eine zentrale oder eine dezentrale Stromversorgung sein. Indessen ist vorzugsweise keine zentrale Versorgung vorgesehen. Es kann somit beispielsweise durch den Teilnehmer festgestellt werden, ob an den beiden Anschlüssen für den DALI-Bus ein Strom fließt. Falls das Ergebnis dieser Überprüfung nein ist, wird die Stromversorgung des entsprechenden Teilnehmers aufgeschaltet. Es erfolgen keine weiteren Prüfschritte mehr.

### Schritt 2:

Falls indessen das Ergebnis von Schritt 1 ja ist, also bereits ein messbarer Strom zwischen den Anschlüssen des DALI-Busses des Teilnehmers fließen kann, wird die eigene dezentrale Busversorgung des Teilnehmers aufgeschaltet. Dabei wird durch die Steuereinheit des Teilnehmers überprüft, ob im Zuge des Aufschaltens der eigenen Versorgung ein Polaritätswechsel der DC-Spannung am DALI-Bus erfolgt, beispielsweise indem durch den Teilnehmer erfasst wird, ob ein Nulldurchgang der Spannung am Bus erfolgt. Falls das Ergebnis dieser Überprüfung ja ist, also ein Polaritätswechsel erfolgt, wird darauf geschlossen, dass die Polarität der eigenen Versorgung des Teilnehmers umgekehrt ist zu der herrschenden Polarität am DALI-Bus und der Teilnehmer schaltet seine eigene DALI-Versorgung wieder ab. Es erfolgen vorzugsweise keine weiteren Schritte. Alternativ wird die Polarität der dezentralen Busversorgung invertiert und zu Schritt 3 weitergegangen.

Falls das Ergebnis der Überprüfung nein ist, also kein Polaritätswechsel erfolgt, wird darauf geschlossen, dass die Polarität der herrschenden DALI-Polarität identisch zu der Polarität der DALI-Versorgung des Teilnehmers selbst ist. Es wird dann zu Schritt 3 weitergegangen.

### Schritt 3:

Es werden durch den Teilnehmer Testsignale auf dem DALI-Bus gesendet, was also bedeutet, dass der im Ruhezustand DC-Pegel führende DALI-Bus selektiv kurzgeschlossen wird. Danach wird der Bus wieder freigegeben. Dabei wird jeweils durch den Teilnehmer erfasst, wie lange es dauert, bis sich nach dem Kurzschließen des DALI-Busses wieder die DALI-Ruhebusspannung aufbaut.

Diese Zeitdauer-Erfassung oder Erfassung der Steilheit der steigenden Flanke der DALI-DC-Busspannung wird durch den Teilnehmer einmal ohne die aufgeschaltete DALI-Versorgung und einmal mit der aufgeschalteten eigenen DALI-Versorgung durchgeführt. Es wird somit durch den Teilnehmer festgestellt, bei welchen der beiden Szenarien sich die Flanke schneller erholt, was also bedeutet, dass festgestellt wird, bei welchen Szenario (eigene aufgeschaltete DALI-Versorgung oder nicht) die Stromversorgung für den Bus stärker ist.

Im Weiteren wird dann mit der Konstellation weitergeprüft, bei der sich die Flanke des DALI-Busses nach dem Kurzschließen schneller erholt hat.

### Schritt 4:

Für den Fall, dass das Szenario mit sich schneller erholender ansteigender Flanke des DALI-Busses dasjenige ist, bei dem die eigene DALI-Versorgung des Teilnehmers aufgeschaltet ist, wird durch den Teilnehmer folgende Überprüfung durchgeführt: Gemäß DALI-Standard gibt es, wie bereits oben ausgeführt, eine Maximalbeschränkung von 250 Milliampere, die über den Bus bereitgestellt und verbraucht werden dürfen.

In diesem Prüfungsschritt wird nunmehr anhand einer Funktion oder einer Tabelle überprüft, ob die sich ergebende Flankensteilheit bei Freigabe des Busses (Auflösen des Kurzschlusses) derart groß ist, dass auf eine Bereitstellung einer Stromversorgung von mehr als 250 Milliampere erkannt wird.

Falls dies der Fall sein sollte, sich also der Buszustand "Logic high" zu schnell erholen sollte, wird die eigene DALI-Versorgung wieder abgeschaltet. Dies ist also ein Sicherheitscheck, um die maximal zulässigen Stromwerde für den DALI-Bus nicht zu überschreiten.

Falls sich der Bus-Ruhezustand nicht zu schnell erholt, bleibt die eigene dezentrale Versorgung auf den Bus geschaltet.

Gemäß der Erfindung ist vorgesehen, dass für den Fall, dass festgestellt wird, dass die Polarität der eigenen internen DALI-Versorgung entgegengesetzt ist zu der herrschenden Polarität am DALI-Bus, die Polarität der eigenen DALI-Versorgung invertiert wird.

## Patentansprüche

1. Busfähiger Beleuchtungssystem-Teilnehmer, aufweisend
eine Spannungsversorgung, die selektiv zur Versorgung eines Busses (3) aufschaltbar ist, der im Ruhezustand eine Spannung führt, und
eine Steuerschaltung (4), die dazu ausgelegt ist, eine Veränderung der Busspannung in Folge jedes der beiden folgenden Ereignisse zu erfassen:
a.) das Aufschalten der Spannungsversorgung des Teilnehmers, und
b.) ein Kurzschließen des Busses (3) durch den Teilnehmer;
**dadurch gekennzeichnet, dass**
die Steuerschaltung (4) ferner dazu ausgelegt ist, bei einem Aufschalten der Spannungsversorgung auf den Bus (3) zu erfassen, ob sich die Polarität der Spannung auf dem Bus (3) im Zuge des Aufschaltens ändert, und
dass die Steuerschaltung (4) dazu ausgelegt ist, beim genannten Aufschalten bei sich ändernder Polarität der Spannung auf dem Bus (3) eine Polarität der Spannungsversorgung des Teilnehmers zu invertieren, und wie auch bei sich nicht ändernder Polarität der Spannung auf dem Bus (3) den Bus kurzzuschließen und nach anschließender Freigabe:
zu erfassen, wie schnell die Spannung auf dem Bus nach dem Kurzschließen von dem Kurzschlusspegel wieder auf den DC-Spannungspegel vor dem Kurzschluss ansteigt, wobei dies einmal mit und einmal ohne aufgeschalteter Spannungsversorgung des Teilnehmers durchgeführt wird, oder
die Steilheit der ansteigenden Busspannungsflanke zu erfassen, wobei dies einmal mit und einmal ohne aufgeschalteter Spannungsversorgung des Teilnehmers durchgeführt wird.

2. Beleuchtungssystem-Teilnehmer nach einem der vorhergehenden Ansprüche, der ein Betriebsgerät für Leuchtmittel oder ein Sensor ist.

3. Busbasiertes Beleuchtungssystem, aufweisend einen oder mehrere Teilnehmer nach einem der vorhergehenden Ansprüche.

4. Verfahren zum Betrieb eines busfähigen Beleuchtungssystem-Teilnehmers, aufweisend eine Spannungsversorgung, die selektiv zur Versorgung eines Busses (3) aufschaltbar ist, der im Ruhezustand eine Spannung führt,
wobei bei dem Verfahren eine Veränderung der Busspannung infolge jedes der beiden folgenden Ereignisse erfasst wird:
a.) das Aufschalten der Spannungsversorgung, und
b.) ein Kurzschließen des Busses (3);
**dadurch gekennzeichnet, dass** bei einem Aufschalten der Spannungsversorgung auf den Bus (3) erfasst wird, ob sich die Polarität der Spannung auf dem Bus (3) im Zuge des Aufschaltens ändert, und
dass beim genannten Aufschalten bei sich ändernder Polarität der Spannung auf dem Bus (3) eine Polarität der Spannungsversorgung des Teilnehmers invertiert wird, und wie auch bei sich nicht ändernder Polarität der Spannung auf dem Bus (3) der Bus kurzgeschlossen wird und nach anschließender Freigabe:
erfasst wird, wie schnell die Spannung auf dem Bus nach dem Kurzschließen von einem Kurzschlusspegel wieder auf den DC-Spannungspegel vor dem Kurzschluss ansteigt, wobei dies einmal mit und einmal ohne aufgeschalteter Spannungsversorgung des Teilnehmers durchgeführt wird, oder
die Steilheit der ansteigenden Busspannungsflanke erfasst wird, wobei dies einmal mit und einmal ohne aufgeschalteter Spannungsversorgung des Teilnehmers durchgeführt wird.

## Claims

1. Bus-capable lighting system user, comprising
a voltage supply which can be selectively connected to supply a bus (3) which carries a voltage in the idle state, and
a control circuit (4) which is designed to detect a change in the bus voltage as a result of each of the following two events:
a.) the connection of the power supply of the user, and
b.) a short-circuiting of the bus (3) by the user;
**characterized in that**
the control circuit (4) is further designed to detect, when the voltage supply is connected to the bus (3), whether the polarity of the voltage on the bus (3) changes in the course of the connection, and
**in that** the control circuit (4) is designed to invert a polarity of the power supply of the user if the polarity of the voltage on the bus (3) changes during the aforementioned connection, and, if the polarity of the voltage on the bus (3) does not change, to short-circuit the bus, and after subsequent release:
to detect how quickly the voltage on the bus rises after the short-circuit from the short-circuit level to the DC voltage level before the short-circuit, this being carried out once with and once without the power supply of the user being connected, or
to detect the steepness of the rising bus voltage edge, this being carried out once with and once without the power supply of the user being connected.

2. Lighting system user according to the preceding claim, which is an operating device for lamps or a sensor.

3. Bus-based lighting system comprising one or more users according to either of the preceding claims.

4. Method for operating a bus-capable lighting system user, comprising a voltage supply which can be selectively connected to supply a bus (3) which carries a voltage in the idle state,
a change in the bus voltage as a result of each of the following two events being detected in the method:
a.) the connection of the power supply, and
b.) a short-circuiting of the bus (3);
**characterized in that,** when the voltage supply is connected to the bus (3), it is detected whether the polarity of the voltage on the bus (3) changes in the course of the connection, and
**in that** during the aforementioned connection, if the polarity of the voltage on the bus (3) changes, the polarity of the power supply of the user is inverted, and if the polarity of the voltage on the bus (3) does not change, the bus is short-circuited, and after subsequent release:
it is detected how quickly the voltage on the bus rises after the short-circuit from a short-circuit level to the DC voltage level before the short-circuit, this being carried out once with and once without the power supply of the user being connected, or
the steepness of the rising bus voltage edge is detected, this being carried out once with and once without the power supply of the user being connected.

## Revendications

1. Élément participant de système d'éclairage compatible bus, présentant
une alimentation en tension qui peut être commutée sélectivement pour l'alimentation d'un bus (3) qui conduit une tension à l'état de repos, et
un circuit de commande (4) qui est configuré pour détecter un changement de la tension de bus à la suite de chacun des deux évènements suivants :
a.) la commutation de l'alimentation en tension de l'élément participant, et
b.) une mise en court-circuit du bus (3) par l'élément participant ;
**caractérisé en ce que**
le circuit de commande (4) est en outre configuré pour détecter, lors d'une commutation de l'alimentation en tension sur le bus (3), si la polarité de la tension sur le bus (3) change au cours de la commutation ou non, et
**en ce que** le circuit de commande (4) est configuré pour inverser une polarité de l'alimentation en tension de l'élément participant lors de ladite commutation en cas de changement de polarité de la tension sur le bus (3), et également pour court-circuiter le bus en cas de non-changement de polarité de la tension sur le bus (3) et, après validation ultérieure :
pour détecter la vitesse à laquelle la tension sur le bus augmente après la mise en court-circuit, repassant du niveau de court-circuit au niveau de tension CC avant le court-circuit, dans lequel ladite détection est effectuée une fois avec et une fois sans alimentation en tension commutée de l'élément participant, ou
pour détecter la pente du flanc de tension de bus augmentant, dans lequel ladite détection est effectuée une fois avec et une fois sans alimentation en tension commutée de l'élément participant.

2. Élément participant de système d'éclairage selon l'une des revendications précédentes qui est un appareil de fonctionnement pour un moyen d'éclairage ou un capteur.

3. Système d'éclairage basé sur bus, présentant un ou plusieurs éléments participants selon l'une des revendications précédentes.

4. Procédé permettant de faire fonctionner un élément participant de système d'éclairage compatible bus, présentant une alimentation en tension qui peut être commutée sélectivement pour l'alimentation d'un bus (3) qui conduit une tension à l'état de repos,
dans lequel un changement de la tension de bus est détecté par le procédé à la suite de chacun des deux évènements suivants :
a.) la commutation de l'alimentation en tension, et
b.) une mise en court-circuit du bus (3) ;
**caractérisé en ce qu'**est détecté, lors d'une commutation de l'alimentation en tension sur le bus (3), si la polarité de la tension sur le bus (3) change au cours de la commutation ou non, et
**en ce que,** lors de ladite commutation, en cas de changement de polarité de la tension sur le bus (3), une polarité de l'alimentation en tension de l'élément participant est inversée, et également, en cas de non-changement de polarité de la tension sur le bus (3), le bus est court-circuité et, après validation ultérieure :
la vitesse à laquelle la tension sur le bus augmente après la mise en court-circuit, repassant d'un niveau de court-circuit au niveau de tension CC avant le court-circuit, est détectée, dans lequel ladite détection est effectuée une fois avec et une fois sans alimentation en tension commutée de l'élément participant, ou
la pente du flanc de tension de bus augmentant est détectée, dans lequel ladite détection est effectuée une fois avec et une fois sans alimentation en tension commutée de l'élément participant.
